# EUROPÄISCHE PATENTSCHRIFT

(11) **EP 0 579 145 B1**
(45) Veröffentlichungstag und Bekanntmachung des Hinweises auf die Patenterteilung: **20.11.1996**
(21) Anmeldenummer: 93111096.9
(22) Anmeldetag: 10.07.1993
(51) Int. Cl.: B60K 15/04

(54) **Abdichtungsvorrichtung für Treibstoffdämpfe aus einem Tankstutzen eines Kraftfahrzeugs**
Sealing device for fuel vapour coming from the tank filler neck of a motor vehicle
Dispositif d'étanchéité pour les vapeurs d'essence venant de l'embout de remplissage d'un véhicule automobile

(30) Priorität: 14.07.1992 DE 4223081
(43) Veröffentlichungstag der Anmeldung: 19.01.1994
(73) Patentinhaber: Kaco GmbH + Co., D-74072 Heilbronn (DE)
(72) Erfinder: Heinrich, Richard W., D-74074 Heilbronn (DE)
(74) Vertreter: Kohl, Karl-Heinz

(56) Entgegenhaltungen:
- WO-A-90/14244
- DE-A- 3 718 236
- DE-A- 4 109 337
- FR-A- 2 205 474
- US-A- 3 478 922
- US-A- 4 822 054
- US-A- 4 898 395

## Beschreibung

Die Erfindung betrifft eine Abdichtungsvorrichtung für Treibstoffdämpfe aus einem Tankstutzen eines Kraftfahrzeuges nach dem Oberbegriff des Anspruches 1.

Es ist bekannt, am Zapfhahn einer Tanksäule eine Abdichtungsvorrichtung in Form einer Manschette anzubringen, die während des Tankvorganges den Bereich des Tankstutzens des Kraftfahrzeuges abdeckt. Dadurch soll verhindert werden, daß Treibstoffdämpfe während des Tankvorganges nach außen treten. Diese Abdichtungsvorrichtung ist lediglich während des Tankvorganges wirksam. Wird nach dem Tankvorgang der Zapfhahn aus dem Tankstutzen gezogen und der Tankdeckel wieder aufgeschraubt, dann können Treibstoffdämpfe, insbesondere bei hohen Außentemperaturen, an die Umgebung abgegeben werden.

Bei der gattungsgemäßen Abdichtungsvorrichtung (US-A-3 478 922) liegen die Dichtungslamellen in der Schließlage mit ihren Rändern aneinander, wodurch der Tankstutzenquerschnitt verschlossen wird. Wird der Zapfhahn beim Tankvorgang in den Tankstutzen eingeführt, werden die Dichtungslamellen elastisch verformt, so daß sie unter elastischer Verformung am Zapfhahn anliegen. Allerdings ist über den Umfang des Zapfhahnes keine Abdichtung mehr gegeben, da die Dichtungslamellen in der verformten Lage mit Abstand voneinander am Zapfhahn anliegen. Dadurch können während des Tankvorganges Treibstoffdämpfe nach außen entweichen.

Es ist auch eine Abdichtungsvorrichtung bekannt (WO 90/14244), die aufwendig gestaltete Dichtteile hat, die in der Schließlage stoßend aneinander liegen. Beim Einführen des Zapfhahnes werden die Dichtteile elastisch nach außen gebogen. Die Abdichtungsvorrichtung liegt mit einer umlaufenden Dichtkante an der Außenseite des Zapfhahnes an. Da der Innendurchmesser der Dichtkante vorgegeben ist, kann die Abdichtungsvorrichtung nur für einen entsprechenden Außendurchmesser des Zapfhahnes verwendet werden. Die Abdichtung ist darüber hinaus von den Elastomereigenschaften des Dichtteils im Bereich der Dichtkante abhängig. Je nach Temperatur ergeben sich unterschiedliche Elastomereigenschaften mit entsprechend unterschiedlichen Abdichtungen.

Es ist schließlich eine Abdichtungsvorrichtung bekannt (US-A-4 822 054), deren Dichtteil einen schlauchförmigen Körper hat, der von der Einführöffnung des Tankstutzens aus nach innen ragt. Der Schlauchkörper ist so gestaltet, daß seine Innenwandungen aneinander liegen. Für den Tankvorgang muß der Zapfhahn den Schlauchkörper elastisch aufweiten. Dies bereitet erhebliche Probleme, zumal der Schlauchkörper verhältnismäßig lang ist. Der Zapfhahn kann außerdem den Schlauchkörper beim Aufweiten beschädigen.

Der Erfindung liegt die Aufgabe zugrunde, die gattungsgemäße Abdichtungsvorrichtung so auszubilden, daß sie beim Einführen des Zapfhahnes einfach geöffnet werden kann und während des Tankvorganges ein Entweichen von schädlichen Treibstoffdämpfen aus dem Tankstutzen zuverlässig verhindert.

Diese Aufgabe wird bei der gattungsgemäßen Abdichtungsvorrichtung erfindungsgemäß mit den kennzeichnenden Merkmalen des Anspruches 1 gelöst.

Bei der erfindungsgemäßen Abdichtungsvorrichtung überlappen die Dichtungslamellen in der Schließstellung des Dichtteiles einander. Dadurch wird zuverlässig verhindert, daß schädliche Treibstoffdämpfe, insbesondere an heißen Tagen, in großen Mengen an die Umgebung abgegeben werden. Aufgrund der Überlappung der Dichtungslamellen ist gewährleistet, daß sie beim Tankvorgang über den gesamten Umfang dichtend am Zapfhahn anliegen und zwischen den einzelnen Dichtungslamellen kein Abstand besteht. Dadurch kann der Zapfhahn einerseits sehr leicht eingeschoben werden, ohne daß zu befürchten ist, daß das Dichtteil beschädigt wird. Andererseits ist gewährleistet, daß die Dichtungslamellen auch im elastisch verformten Zustand über den Umfang des Zapfhahnes dichtend an ihm anliegen, so daß schädliche Treibstoffdämpfe während des Tankvorganges nicht aus dem Tankstutzen gelangen können. Darüber hinaus ist die Abdichtung während des Tankvorganges nicht von der Dimensionierung oder von den Elastomereigenschaften des Dichtteils abhängig, da aufgrund der Überlappung der Dichtungslamellen ein dichtender Abschluß während des Tankvorganges gewährleistet ist.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert.
Es zeigen:
- Fig. 1: in einem Längsschnitt eine auf einem Tankstutzen eines Kraftfahrzeuges vorgesehene Abdichtungsvorrichtung, durch welche ein Zapfhahn ragt,
- Fig. 2: die Abdichtungsvorrichtung gemäß Fig. 1 teilweise in Seitenansicht und teilweise im Schnitt mit aufgesetztem Tankdeckel,
- Fig. 3: einen vom Unterteil der erfindungsgemäßen Abdichtungsvorrichtung abgenommenen Oberteil im Längsschnitt,
- Fig. 4: eine Draufsicht auf das Oberteil der erfindungsgemäßen Abdichtungsvorrichtung mit einem in Schließstellung befindlichen Dichtteil,
- Fig. 5: das Oberteil der erfindungsgemäßen Abdichtungsvorrichtung mit einem in Offenstellung befindlichen Dichtteil,
- Fig. 6: in schematischer Darstellung den Anschluß der erfindungsgemäßen Abdichtungsvorrichtung an eine Motorentlüftungseinrichtung eines Kraftfahrzeuges.

Die Abdichtungsvorrichtung 10 dient dazu, das Entweichen gesundheitsgefährdender Kraftstoffdämpfe zumindest weitgehend zu vermeiden. Die Abdichtungsvorrichtung ist im Bereich eines Tankstutzens 5 eines Kraftfahrzeuges vorgesehen und hat ein aus formsteifem Material bestehendes Unterteil 10a, auf das ein Oberteil 10b aufsetzbar ist. Das Unterteil 10a und/ oder das Oberteil 10b können aus metallischen Werkstoffen oder aus Kunststoff bestehen.

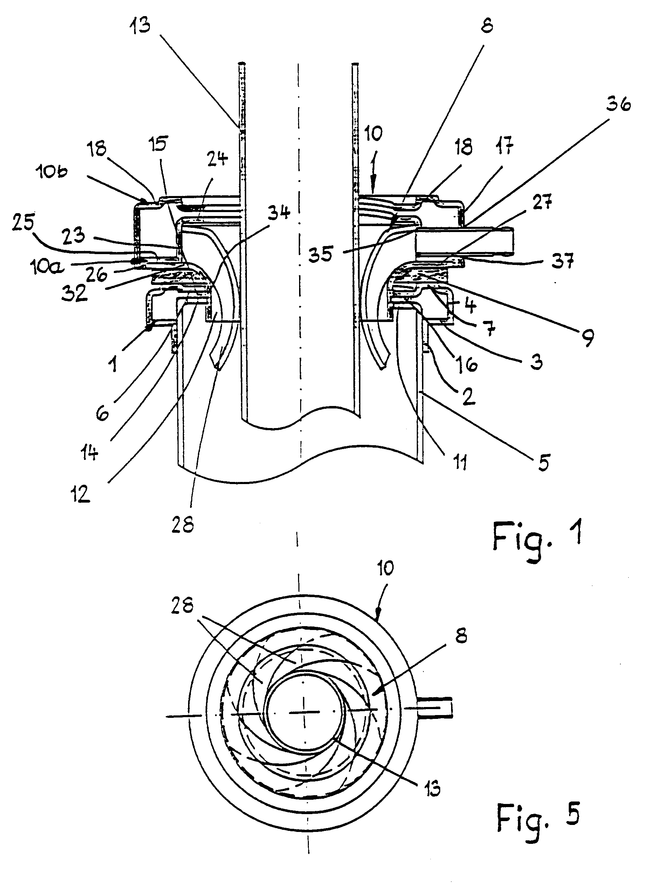

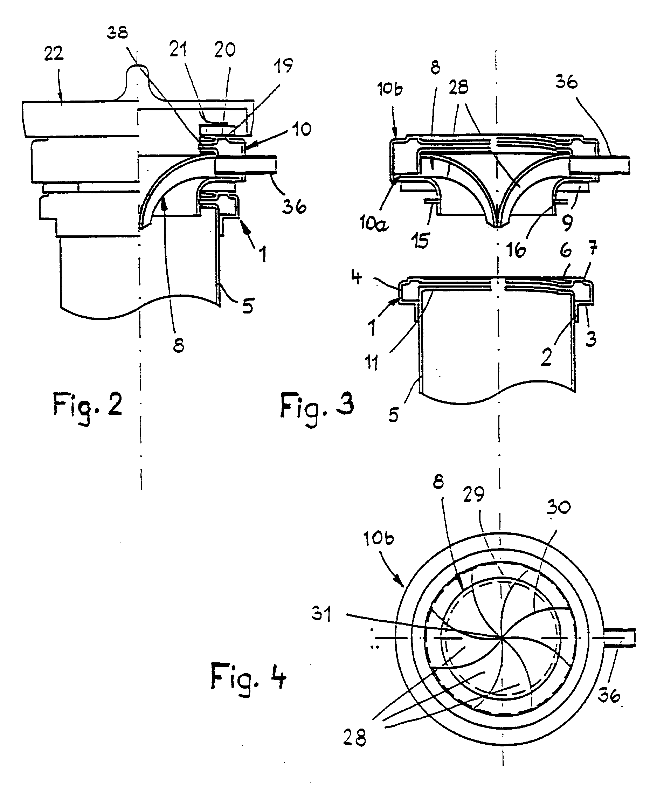

Das Unterteil 10a der Abdichtungsvorrichtung wird auf einem Aufsatz 1 des Tankstutzens 5 befestigt. Der Aufsatz 1 hat einen Ringteil 2, der an der Außenseite des Tankstutzens 5 anliegt (Fig. 1 und 3). Der Ringteil 2 geht am oberen Ende in einen radial nach außen gerichteten Flansch 3 über, der den Ringteil 2 mit einem weiteren Ringteil 4 verbindet, der größeren Durchmesser hat als der auf dem Tankstutzen 5 aufliegende Ringteil 2. Am oberen Ende geht der Ringteil 4 in einen radial nach innen gerichteten Flansch 6 über, der mit einer umlaufenden Erhöhung 7 versehen ist. Sie wird vorzugsweise durch einen plastisch verformten Abschnitt des Flansches 6 gebildet und hat eine ebene Oberseite, die als Auflagefläche für eine Dichtung 9 dient, welche die Trennstelle zwischen der Abdichtungsvorrichtung 10 und dem Aufsatz 1 des Tankstutzens 5 abdichtet. Die Dichtung 9 ist eine Ringdichtung, die vorteilhaft an der Unterseite des Unterteils 10a der Abdichtungsvorrichtung 10 befestigt ist.

Wie Fig. 1 zeigt, hat der Tankstutzen 5 am oberen Ende einen radial nach innen gerichteten Flansch 11, der eine Durchtrittsöffnung 12 für einen Zapfhahn 13 begrenzt. Der Flansch 6 des Aufsatzes 1 erstreckt sich radial nach innen gleich weit wie der Flansch 11. Die beiden Flansche 6 und 11 liegen mit Abstand übereinander. Sie begrenzen einen Verriegelungsschlitz 14 für zwei Verriegelungsteile 15 und 16 des Unterteils 10a der Abdichtungsvorrichtung. Die beiden Verriegelungsteile 15, 16 sind jeweils laschenförmig ausgebildet und sind diametral einander gegenüberliegend am Unterteil 10a der Abdichtungsvorrichtung vorgesehen. Damit die Verriegelungsteile 15, 16 in die Verriegelungsstellung gemäß den Fig. 1 und 2 gelangen können, ist der Flansch 6 des Tankstutzenaufsatzes 1 am radial inneren Rand mit zwei (nicht dargestellten) Ausnehmungen versehen, durch welche die Verriegelungsteile 15, 16 beim Aufsetzen bzw. Abnehmen der Abdichtungsvorrichtung hindurchtreten können. Beim Aufsetzen wird die Abdichtungsvorrichtung um ihre Achse gedreht, wenn sich die Verriegelungsteile 15, 16 im Verriegelungsschlitz 14 befinden.

Das Oberteil 10b der Abdichtungsvorrichtung 10 hat einen Ringteil 17, der größeren Durchmesser als der Ringteil 4 des Tankstutzenaufsatzes 1 aufweist. Am oberen Rand ist der Ringteil 17 mit einem radial nach innen gerichteten Flansch 18 versehen, der mit einer umlaufenden Erhöhung 19 versehen ist, die vorzugsweise als umlaufende Sicke ausgebildet ist. Sie hat eine ebene Ober- und Unterseite. Auf der Oberseite 20 der Erhöhung 19 liegt, wie Fig. 2 zeigt, ein Dichtring 21 eines Tankdeckels 22 auf, der vorzugsweise auf das Oberteil 10b der Abdichtungsvorrichtung geschraubt wird. Der Flansch 18 des Oberteils 10b hat gleichen Innendurchmesser wie die Flansche 6 und 11 des Tankstutzenaufsatzes 1 und des Tankstutzens 5.

Der Unterteil 10a der Abdichtungsvorrichtung hat einen zum Ringteil 17 des Oberteils 10b koaxialen Ringteil 23 (Fig. 1), dessen oberer Rand radial nach innen gebogen ist und einen umlaufenden Flansch 24 bildet. Er hat gleichen Innendurchmesser wie der Flansch 18 des Oberteils 10b. Am unteren Rand geht der Ringteil 23 in einen radial nach außen gerichteten Flansch 25 über, der mit einem radial äußeren, rechtwinklig abgewinkelten Rand 26 an der Innenseite des Ringteils 17 des Oberteils 10b anliegt. Die freien Stirnseiten des Ringteils 17 und des abgewinkelten Randes 26 liegen bündig, während die Unterseite 27 des Flansches 25 gegenüber der Stirnseite axial zurückgesetzt ist. Wie Fig. 1 zu entnehmen ist, hat der Ringteil 23 des Unterteils 10a der Abdichtungsvorrichtung gleichen Durchmesser wie der Tankstutzen 5.

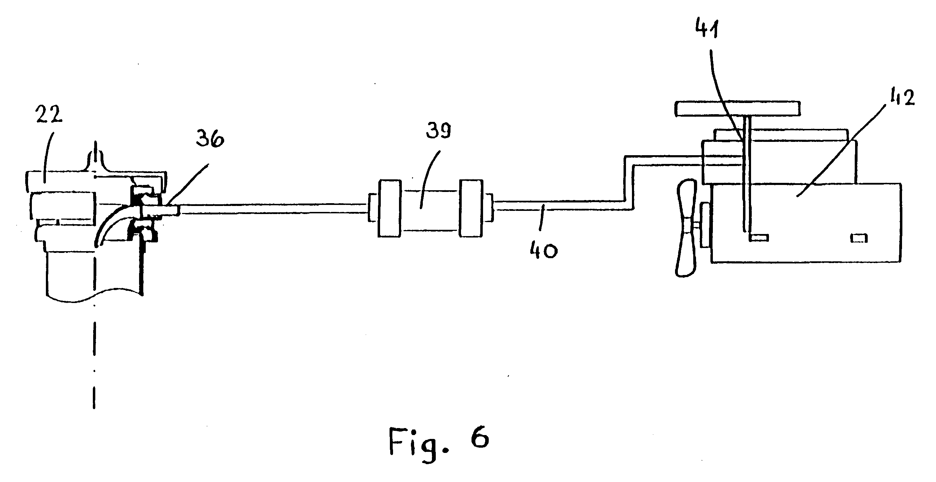

Am Unterteil 10a der Abdichtungsvorrichtung ist das Dichtteil 8 befestigt, das vorteilhaft als Dichtungsmanschette ausgebildet ist. Das Dichtteil 8 besteht aus einzelnen Lamellen 28, die in Seitenansicht (Fig. 1 bis 3) vom Unterteil 10a aus gekrümmt nach unten in Richtung auf den Tankstutzen 5 verlaufen. Die Dichtungslamellen 28 verjüngen sich in Richtung auf ihr freies Ende und sind an der Innenseite des Ringteils 23 des Oberteils 10b der Abdichtungsvorrichtung befestigt. Die Dichtungslamellen 28 haben im Bereich ihrer Befestigungsstelle gleiche Höhe wie der Ringteil 23. In Achsrichtung gesehen (Fig. 4) haben die Dichtungslamellen 28 konvex gekrümmte Seitenränder 29 und 30, die am freien Ende in einer Spitze 31 zusammenlaufen. Die einzelnen Dichtungslamellen 28 überlappen einander in der in Fig. 4 dargestellten Schließstellung, in der sie den Innenquerschnitt der Abdichtungsvorrichtung verschließen. In Achsrichtung gesehen bilden die Dichtungslamellen 28 in der Achse der Abdichtungsvorrichtung eine Spitze 31. Jede einzelne Dichtungslamelle 28 ist in bezug auf eine zugehörige Axialebene der Abdichtungsvorrichtung geneigt angeordnet. Wie sich aus Fig. 3 ergibt, ragen die Dichtungslamellen 28 axial in Richtung auf den Tankstutzen 5 über die Abdichtungsvorrichtung.

Das Dichtteil 8 kann am Unterteil 10a mechanisch befestigt oder durch Vulkanisation mit ihm verbunden sein. Die Verbindung zwischen dem Unterteil 10a und dem Dichtteil 8 ist auf jeden Fall so ausgebildet, daß auch bei langem Einsatz der Abdichtungsvorrichtung ein Ablösen des Dichtteils 8 vom Unterteil 10a zuverlässig vermieden wird.

An der Unterseite 27 des Flansches 25 des Unterteils 10a ist ein radial nach außen gerichteter Flansch 32 eines Ansatzes 33 befestigt, mit dem die Abdichtungsvorrichtung in der Einbaulage in den Tankstutzen 5 ragt. Der Flansch 32 erstreckt sich bis zum Rand 26 des Unterteils 10a und geht stetig gekrümmt in einen Ringteil 34 über, mit dem der Ansatz 33 in den Tankstutzen 5 ragt. In der Einbaulage liegt der Ringteil 34 am Rand der mit Abstand übereinander liegenden Flansche 6 und 11 des Tankstutzenaufsatzes 1 und des Tankstutzens 5 an. Die Dichtung 9 liegt an der Unterseite des Flansches 32 an und erstreckt sich bis zum Übergangsbereich vom Flansch 32 zum Ringteil 34 (Fig. 1).

Der Ringteil 23 des Unterteils 10a hat eine Durchtrittsöffnung 35, an die ein Entlüftungsstutzen 36 angeschlossen ist. Er durchsetzt eine Durchtrittsöffnung 37, die im Ringteil 17 des Oberteils 10b der Abdichtungsvorrichtung vorgesehen ist. Der Ringteil 17 umgibt mit Abstand den Ringteil 23 und stützt den Entlüftungsstutzen 36 sicher ab. Über den Entlüftungsstutzen 36 kann die Luft im Tank vor dem Einfüllen des Treibstoffes abgeführt oder zu einem Filter 39 (Fig. 6) geleitet werden, der die Schadstoffe zurückhält. Die Luft kann zwischen den Dichtungslamellen 28 auch in Dichtstellung des Dichtteils 8 zum Entlüftungsstutzen 36 strömen.

Wie sich aus Fig. 1 ergibt, sind die beiden mit Abstand übereinander liegenden Flansche 18 und 24 des Ober- und des Unterteils der Abdichtungsvorrichtung über einen Teil ihres Umfanges als Gewinde ausgebildet. Es ist so vorgesehen, daß ein am Tankdeckel 22 vorgesehener Verriegelungsteil 38 (Fig. 2) beim Aufschrauben zwischen die beiden Flansche 18, 24 eingreifen kann. So wie der Tankdeckel 22 auf den Tankstutzen 5 bzw. dessen Aufsatz 1 bei herkömmlichen Kraftfahrzeugtankstutzen geschraubt werden kann, wird er nunmehr auf die Abdichtungsvorrichtung geschraubt. Die am Tankdeckel 22 vorgesehene Dichtung 21 dichtet in aufgeschraubtem Zustand den Tankdeckel gegenüber der Abdichtungsvorrichtung 10 ab, so daß keine Dämpfe aus dem Tank über den Tankstutzen 5 nach außen gelangen können.

Nach Abnehmen des Tankdeckels 22 ist der Tankstutzen 5 zunächst durch das Dichtteil 8 geschlossen (Fig. 4), so daß aus dem Tankinneren auch bei abgenommenem Tankdeckel keine Dämpfe nach außen dringen können. Wird nunmehr der Zapfhahn 13 beim Tankvorgang in den Tankstutzen 5 eingeführt, werden die Dichtungslamellen 28 elastisch auseinandergedrückt (Fig. 1 und 5). Die Dichtungslamellen 28 liegen, wie Fig. 1 zeigt, dichtend am Umfang des Zapfhahns 13 an und verhindern, daß schädliche Benzindämpfe während des Tankvorganges nach außen gelangen können. Wird der Zapfhahn 13 wieder zurückgezogen, dann federn die Dichtungslamellen 28 in ihre Schließstellung gemäß Fig. 4 zurück. Wie sich aus Fig. 5 ergibt, liegen die Dichtungslamellen 28 über den Umfang vollständig am Zapfhahn 13 an. Da die Dichtungslamellen 28 in Richtung auf den Tankstutzen 5 gekrümmt verlaufen (Fig. 3), läßt sich der Zapfhahn 13 einfach einführen. Außerdem können infolge dieser Ausbildung die Dichtungslamellen 28 leicht elastisch weggebogen werden. Da die Dichtungslamellen in bezug auf die jeweils zugehörige Axialebene unter einem Winkel geneigt über ihre Länge verlaufen, werden sie beim Einstecken des Zapfhahns 13 übereinander geschoben (Fig. 5), so daß eine einwandfreie Abdichtung des freien Querschnitts zwischen dem Außenmantel des Zapfhahns 13 und dem Ringteil 34 des Ansatzes 33 erreicht wird.

Da die Abdichtungsvorrichtung am Tankstutzen 5 des Kraftfahrzeuges befestigt ist, steht sie bei jedem Tankvorgang zur Verfügung. Der Tankdeckel 22 kann in der beschriebenen Weise einfach auf die Abdichtungsvorrichtung 10 geschraubt werden.

Vorteilhaft ist die Abdichtungsvorrichtung 10 lösbar am Tankstutzen 5 bzw. dessen Aufsatz 1 befestigt, so daß sie bei Verschleiß und/oder Beschädigung einfach ausgewechselt werden kann. Das Dichtteil 8 besteht vorteilhaft aus einem hochwertigen benzin- und/oder benzolbeständigen Werkstoff, beispielsweise aus Fluorkautschuk oder ähnlichem.

Mit der beschriebenen Abdichtungsvorrichtung wird der Tankstutzen 5 des Kraftfahrzeuges einwandfrei abgedichtet. Die Kraftstoffdämpfe, die im Tank des Kraftfahrzeuges entstehen, gelangen infolge der Abdichtungsvorrichtung nicht nach außen, sondern werden über den Entlüftungsstutzen 36 zum beschriebenen Filter 39 geleitet, der die Schadstoffe zurückhält. Gerade bei großen Temperaturunterschieden, bei denen bei den herkömmlichen Tankstutzen die Treibstoffdämpfe in die Umgebung gelangen, wirkt sich die Abdichtungsvorrichtung besonders vorteilhaft aus. Sie verhindert zuverlässig, daß die schädlichen Treibstoffdämpfe aus dem Tank bzw. dem Tankstutzen 5 des Kraftfahrzeuges in die Umgebung strömen können. Die Abdichtungsvorrichtung leistet darum einen großen Beitrag zum Umweltschutz.

Das konisch sich verjüngende Dichtteil 8 kann ggf. auch faltenbalgähnlich ausgebildet sein. Es ist in diesem Fall elastisch dehnbar, so daß sie beim Einschieben des Zapfhahnes 13 elastisch aufgeweitet wird. Eine solche faltenbalgähnliche Dichtung ist am konisch verjüngten Ende mit einer nur sehr kleinen Öffnung versehen, die beim Einschieben des Zapfhahns 13 elastisch aufgeweitet wird. Der Rand dieser aufgeweiteten Öffnung des Dichtteiles liegt dann ebenfalls dichtend am Mantel des Zapfhahns 13 an, so daß schädliche Kraftstoffdämpfe während des Tankvorganges nicht nach außen gelangen können.

Abweichend vom dargestellten und beschriebenen bevorzugten Ausführungsbeispiel kann die Abdichtungsvorrichtung auch am Tankdeckel 22 vorgesehen sein. Wird er auf den Tankstutzen 5 bzw. dessen Aufsatz 1 geschraubt, dann ragt das Dichtteil 8 wiederum teilweise in den Tankstutzen 5 und dichtet ihn ab. Allerdings wird die Abdichtungsvorrichtung beim Abschrauben des Tankdeckels 22 ebenfalls entfernt, so daß dann der Zapfhahn 13 unmittelbar in bekannter Weise in den Tankstutzen 5 gesteckt wird.

Es ist auch möglich, die Abdichtungsvorrichtung lösbar am Tankdeckel 22 zu befestigen, so daß sie für den Tankvorgang nach dem Abschrauben des Tankdeckels 22 abgenommen und lose auf den Tankstutzen 5 bzw. dessen Aufsatz 1 gesteckt werden kann. Dann ist diese Abdichtungsvorrichtung auch während des Tankvorganges wirksam.

Der Filter 39 ist vorzugsweise ein Aktivkohlefilter, in dem die aus dem Tank entweichenden Schadstoffe zurückgehalten werden. Nach entsprechender Einsatzdauer muß der Aktivkohlefilter ausgewechselt werden. Um dies zu vermeiden, ist der Aktivkohlefilter 39 über eine Leitung 40 mit einer nur schematisch dargestellten Entlüftungseinrichtung 41 eines Motors 42 des Fahrzeuges verbunden (Fig. 6). Infolge dieses Anschlusses an die Entlüftungseinrichtung 41 wird die Aktivkohle des Filters 39 durch ständige leichte Rückluft getrocknet. Dadurch entfällt das Auswechseln des Filters 39.

## Patentansprüche

1. Abdichtungsvorrichtung für Treibstoffdämpfe aus einem Tankstutzen (5) eines Kraftfahrzeuges, mit einem formsteifen Träger (10a), der mit einem elastisch nachgiebigen und sich in den Tankstutzen (5) erstreckenden Dichtteil (8) versehen ist, das den Tankstutzenquerschnitt verschließt und Dichtungslamellen (28) aufweist, die über den Umfang des Trägers (10a) vorgesehen und durch einen Zapfhahn (13) beim Tankvorgang aus ihrer Schließstellung heraus elastisch verformbar sind und die unter elastischer Verformung am Zapfhahn (13) anliegen,
dadurch gekennzeichnet, daß die Dichtungslamellen (28) in der Schließstellung des Dichtteiles (8) einander überlappen und beim Tankvorgang über den Umfang des Zapfhahnes (13) dichtend an ihm anliegen.

2. Vorrichtung nach Anspruch 1,
dadurch gekennzeichnet, daß der Träger (10a) mit dem Dichtteil (8) durch Vulkanisation verbunden ist.

3. Vorrichtung nach Anspruch 1,
dadurch gekennzeichnet, daß der Träger (10a) mit dem Dichtteil (8) mechanisch verbunden ist und vorzugsweise einen Ringteil (23) aufweist, an dem das Dichtteil (8) befestigt ist.

4. Vorrichtung nach einem der Ansprüche 1 bis 3,
dadurch gekennzeichnet, daß das Dichtteil (8) in Richtung auf das Tankinnere verjüngt ausgebildet ist.

5. Vorrichtung nach einem der Ansprüche 1 bis 4,
dadurch gekennzeichnet, daß die Dichtungslamellen (28) in Richtung auf ihr freies Ende verjüngt ausgebildet sind.

6. Vorrichtung nach einem der Ansprüche 1 bis 5,
dadurch gekennzeichnet, daß die Dichtungslamellen (28) in bezug auf ihre zugehörige Axialebene geneigt angeordnet sind und in unverformtem Zustand den Innenquerschnitt des Ringteiles (23) des Trägers (10a) verschließen.

7. Vorrichtung nach einem der Ansprüche 1 bis 6,
dadurch gekennzeichnet, daß sie am Tankstutzen (5) des Kraftfahrzeuges befestigt ist und dichtend am Tankstutzen (5) anliegt.

8. Vorrichtung nach einem der Ansprüche 1 bis 7,
dadurch gekennzeichnet, daß der Träger (10a) im wesentlichen außerhalb des Tankstutzens (5) liegt, und daß vorzugsweise auf die Abdichtungsvorrichtung (10) ein Tankdeckel (22) aufsetzbar ist.

9. Vorrichtung nach einem der Ansprüche 1 bis 8,
dadurch gekennzeichnet, daß sie lösbar am Tankstutzen (5) befestigt und vorzugsweise mittels eines Klemmverschlusses am Tankstutzen (5) befestigbar ist, in den der Träger (10a) schraubbar ist.

10. Vorrichtung nach einem der Ansprüche 1 bis 9,
dadurch gekennzeichnet, daß sie am Tankdeckel (22) vorgesehen und vorzugsweise lösbar mit ihm verbunden ist.

11. Vorrichtung nach einem der Ansprüche 1 bis 10,
dadurch gekennzeichnet, daß am Träger (10a) ein Abschlußteil (10b) befestigt ist, und daß vorzugsweise der Träger (10a) und der Abschlußteil (10b) ein Gewindeteil (18, 24) zum Aufschrauben des Tankdeckels (22) bilden.

12. Vorrichtung nach einem der Ansprüche 1 bis 11,
dadurch gekennzeichnet, daß der Tankstutzen (5) mit einem Aufsatz (1) versehen ist, auf dem die Abdichtungsvorrichtung (10) dichtend aufliegt.

13. Vorrichtung nach einem der Ansprüche 1 bis 12,
dadurch gekennzeichnet, daß das Tankinnere über wenigstens einen Entlüftungsstutzen (36) mit einem Filter (39), vorzugsweise einem Aktivkohlefilter, verbunden ist, und daß der Entlüftungsstutzen (36) vorzugsweise am Ringteil (23) des Trägers (10a) und am Abschlußteil (10b) befestigt ist.

14. Vorrichtung nach Anspruch 13,
dadurch gekennzeichnet, daß der Filter (39) an eine Entlüftungseinrichtung (41) eines Motors (42) des Kraftfahrzeuges angeschlossen ist.

## Claims

1. A sealing device for fuel vapour coming from a tank filler neck (5) of a motor vehicle, comprising a rigid support (10a) provided with a resilient sealing member (8) extending into the tank filler neck (5) and sealing the cross-section thereof, the sealing member (8) having sealing segments (28) provided over the circumference of the support (10a) and elastically deformable out of their closed position by a fuel dispenser (13) when the tank is being filled and resting against the fuel dispenser (13) under elastic deformation, characterised in that the sealing segments (28) overlap one another when the sealing member (8) is in the closed position and, when the tank is being filled, rest against the fuel dispenser (13) so as to provide a seal over the circumference thereof.

2. A device according to claim 1, characterised in that the support (10a) is connected to the sealing member (8) by vulcanisation.

3. A device according to claim 1, characterised in that the support (10a) is mechanically connected to the sealing member (8) and preferably has an annular member (23) to which the sealing member (8) is fixed.

4. A device according to any one of claims 1 to 3, characterised in that the sealing member (8) tapers towards the interior of the tank.

5. A device according to any one of claims 1 to 4, characterised in that the sealing segments (28) are tapered in the direction of their free end.

6. A device according to any one of claims 1 to 5, characterised in that the sealing segments (28) are arranged at an angle to their associated axial plane and, in the non-deformed state, seal the inner cross-section of the annular member (23) of the support (10a).

7. A device according to any one of claims 1 to 6, characterised in that it is fixed to the tank filler neck (5) of the motor vehicle and rests against the tank filler neck (5) in a sealed manner.

8. A device according to any one of claims 1 to 7, characterised in that the support (10a) is substantially arranged outside the tank filler neck (5) and in that a filler cap (22) is preferably attachable to the sealing device (10).

9. A device according to any one of claims 1 to 8, characterised in that it is detachably fixed, preferably by means of a clamping fastener, to the tank filler neck (5), into which the support (10a) can be screwed.

10. A device according to any one of claims 1 to 9, characterised in that it is provided on the filler cap (22) and is preferably detachably connected thereto.

11. A device according to any one of claims 1 to 10, characterised in that a closing member (10b) is fixed to the support (10a) and in that the support (10a) and the closing member (10b) preferably form a threaded member (18, 24) for screwing on the filler cap (22).

12. A device according to any one of claims 1 to 11, characterised in that the tank filler neck (5) is provided with a mounting (1), on which the sealing device (10) rests in a sealed manner.

13. A device according to any one of claims 1 to 12, characterised in that the interior of the tank is connected to a filter (39), preferably an activated carbon filter, by at least one vent connection (36), and in that the vent connection (36) is preferably fixed to the annular member (23) of the support (10a) and to the closing member (10b).

14. A device according to claim 13, characterised in that the filter (39) is connected to a ventilation arrangement (41) of an engine (42) of the motor vehicle.

## Revendications

1. Dispositif d'étanchéité pour des vapeurs de carburant s'échappant d'un embout de remplissage (5) du réservoir d'un véhicule, comportant un support (10a) de forme rigide qui est pourvu d'un élément d'étanchéité (8) souple élastique s'étendant dans l'embout de remplissage (5), ledit élément d'étanchéité refermant la section de l'embout de remplissage et présentant des lamelles d'étanchéité (28) qui sont prévues sur la périphérie du support (10a) et qui sont susceptibles d'être élastiquement déformées depuis leur position de fermeture par un pistolet distributeur (13), lors du remplissage du réservoir, et qui sont en contact avec le pistolet distributeur (13) par déformation élastique, caractérisé en ce que les lamelles d'étanchéité (28) se chevauchent les unes les autres dans la position de fermeture de l'élément d'étanchéité (8) et en ce qu'elles sont en contact étanche avec la périphérie du pistolet distributeur (13) pendant le remplissage du réservoir.

2. Dispositif selon la revendication 1, caractérisé en ce que le support (10a) est relié à l'élément d'étanchéité (8) par vulcanisation.

3. Dispositif selon la revendication 1, caractérisé en ce que le support (10a) est relié mécaniquement à l'élément d'étanchéité (8) et présente de préférence une partie annulaire (23) sur lequel est fixé l'élément d'étanchéité (8).

4. Dispositif selon l'une quelconque des revendications 1 à 3, caractérisé en ce que l'élément d'étanchéité (8) est réalisé en se rétrécissant en direction de l'intérieur du réservoir.

5. Dispositif selon l'une quelconque des revendications 1 à 4, caractérisé en ce que les lamelles d'étanchéité (28) sont réalisées en se rétrécissant en direction de leur extrémité libre.

6. Dispositif selon l'une quelconque des revendications 1 à 5, caractérisé en ce que les lamelles d'étanchéité (28) s'étendent inclinées par rapport au plan axial correspondant et referment à l'état non-déformé la section intérieure de la partie annulaire (23) du support (10a).

7. Dispositif selon l'une quelconque des revendications 1 à 6, caractérisé en ce qu'il est fixé sur l'embout de remplissage (5) du réservoir du véhicule et en ce qu'il est en contact étanche avec l'embout de remplissage (5).

8. Dispositif selon l'une quelconque des revendications 1 à 7, caractérisé en ce que le support (10a) est situé sensiblement à l'extérieur de l'embout de remplissage (5) et en ce qu'un bouchon 22 du réservoir est de préférence susceptible d'être mis en place sur le dispositif d'étanchéité (10).

9. Dispositif selon l'une quelconque des revendications 1 à 8, caractérisé en ce qu'il est fixé de manière détachable sur l'embout de remplissage (5) et de préférence au moyen d'une fermeture de serrage sur l'embout de remplissage (5) dans lequel le support (10a) est susceptible d'être vissé.

10. Dispositif selon l'une quelconque des revendications 1 à 9, caractérisé en ce qu'il est prévu sur le bouchon (22) du réservoir et en ce qu'il est relié de préférence de manière détachable à celui-ci.

11. Dispositif selon l'une quelconque des revendications 1 à 10, caractérisé en ce que sur le support (10a) est fixée une pièce de fermeture (10b) et en ce que le support (10a) et la pièce de fermeture (10b) forment de préférence une pièce filetée (18, 24) pour le vissage du bouchon (22) du réservoir.

12. Dispositif selon l'une quelconque des revendications 1 à 11, caractérisé en ce que l'embout de remplissage (5) est pourvu d'un rebord (1) sur lequel le dispositif d'étanchéité (10) repose de manière étanche.

13. Dispositif selon l'une quelconque des revendications 1 à 12, caractérisé en ce que l'intérieur du réservoir est relié par l'intermédiaire d'au moins une tubulure d'échappement (36) à un filtre (39), de préférence un filtre à charbon actif, et en ce que la tubulure d'échappement (36) est fixée de préférence sur la partie annulaire (23) du support (10a) et sur la pièce de fermeture (10b).

14. Dispositif selon la revendication 13, caractérisé en ce que le filtre (39) est raccordé à un système de mise à l'air (41) d'un moteur (42) du véhicule.
